# EUROPEAN PATENT SPECIFICATION

(11) **EP 1 914 474 B1**
(45) Date of publication and mention of the grant of the patent: **27.08.2008**
(21) Application number: 06425717.3
(22) Date of filing: 19.10.2006
(51) Int. Cl.: F21V 21/02

(54) **Wall anchoring element**
Element zur Wandbefestigung
Elément d'ancrage mural

(43) Date of publication of application: 23.04.2008
(73) Proprietor: E.C.I. S.r.l. Elettro Cablaggi Impianti, 24048 Orio al Serio BG (IT)
(72) Inventor: Cavenati, Pierluigi, 24052 Azzano San Paolo (Bergamo) (IT)
(74) Representative: Crippa, Paolo Ernesto

(56) References cited:
- WO-A2-00/16442
- GB-A- 316 721
- US-A- 1 702 888

## Description

The present invention relates to a wall anchoring element, in particular for wall anchoring of lighting appliances.

As known, lighting points are usually fixed to the wall using anchors, for example of the "screw" type, after drilling the wall itself. Moreover, lighting points are applied to the wall after building the electrical connections into the wall itself. Typically, the electrical wires are carried at the lighting point into plastic or rubber pipes, commonly called fairleads, that protrude from the wall and that are buried into the wall coating plaster.

The lighting points are then fixed to the wall through anchors that unavoidably are often very close to the free ends of the fairleads, also due to the fact that the lighting points tend to be provided with increasingly smaller fixing plates.

Accordingly, the wall drilling in the proximity of the fairlead for inserting the anchors often causes the cracking or breakage of the mortar layer adjacent the fairlead. The wall fixing operation of the lighting points is often difficult and inaccurate and requires the use of an electrical drill for piercing the concrete. Moreover, the protruding end of the fairlead is exposed to shocks, for example during the wall painting, and by bending it contributes to damaging the plaster adjacent the fairlead itself.

In the art, the lighting point fixings are therefore usually positioned as far away as possible from the fairlead. In this way there is the constraint of using lighting points having relatively wide anchoring plates, so as to cover the cracks unavoidably produced in the proximity of the electrical cables.

Document WO 0016442 shows a wall anchoring element with a fixing body which is inserted into a recess of a wall.

The object of the present invention is to solve the disadvantages mentioned with reference to the prior art.

Such disadvantages are solved by an anchoring element in accordance with claim 1.

Further embodiments of the anchoring element according to the invention are described in the following claims.

Further features and the advantages of the present invention will appear more clearly from the following description of preferred non-limiting embodiments thereof, wherein:

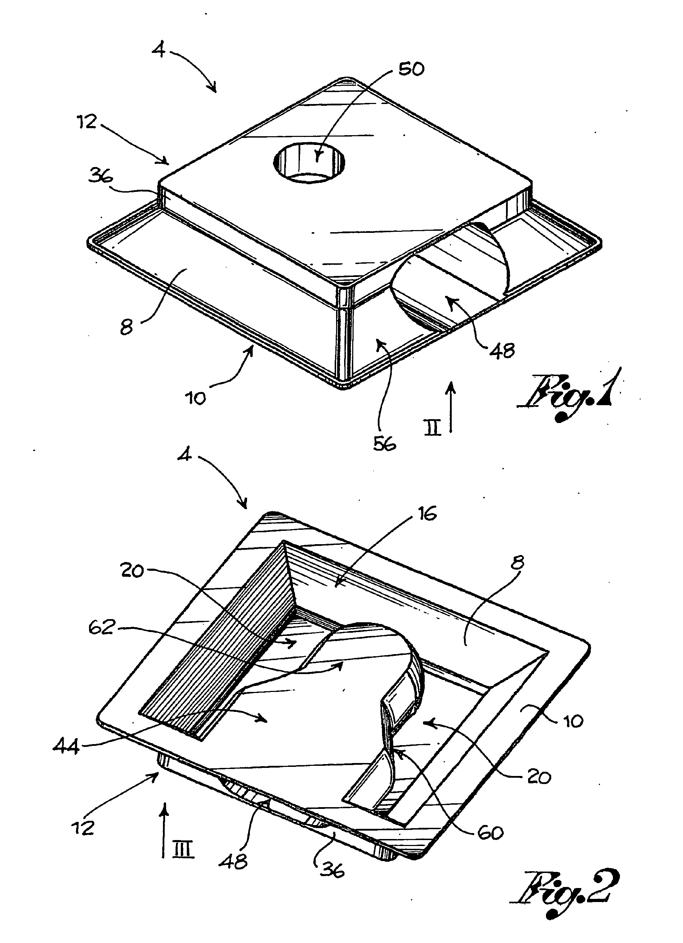

figure 1 shows a perspective view of an anchoring element according to an embodiment of the present invention;

figure 2 shows a perspective view of the element of figure 1, from the side of arrow II of figure 1;

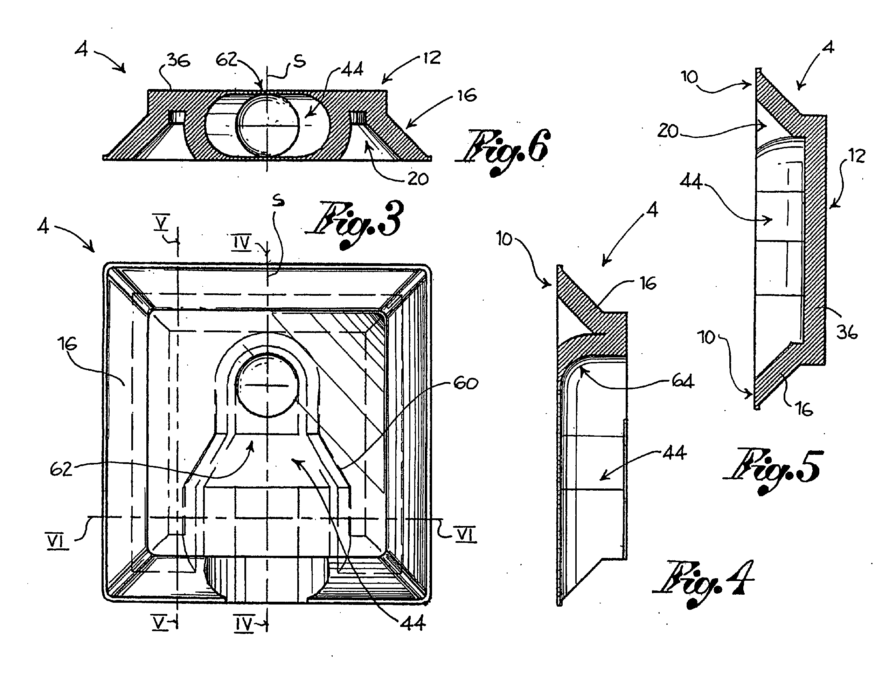

figure 3 shows a plan view of the element of figure 1, from the side of arrow III of figure 2;

figure 4 shows a section view of the element of figure 1, from the side of line IV-IV of figure 3;

figure 5 shows a section view of the element of figure 1, from the side of line V-V of figure 3;

figure 6 shows a section view of the element of figure 1, from the side of line VI-VI of figure 3;

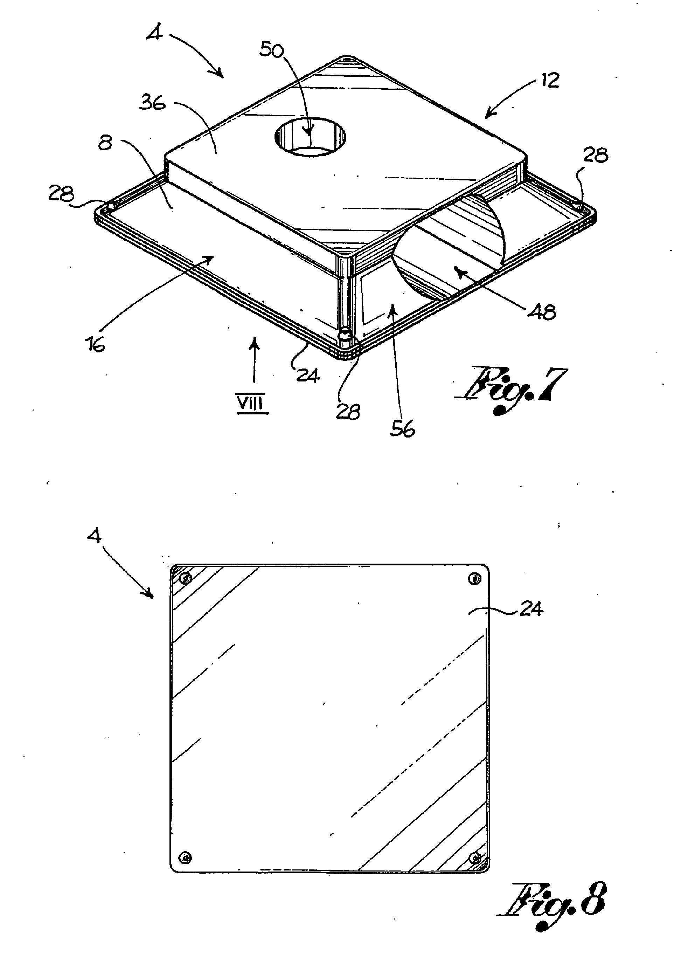

figure 7 shows a perspective view of an anchoring element according to a further embodiment of the present invention;

figure 8 shows a plan view of the element of figure 7, from the side of arrow VIII of figure 7;

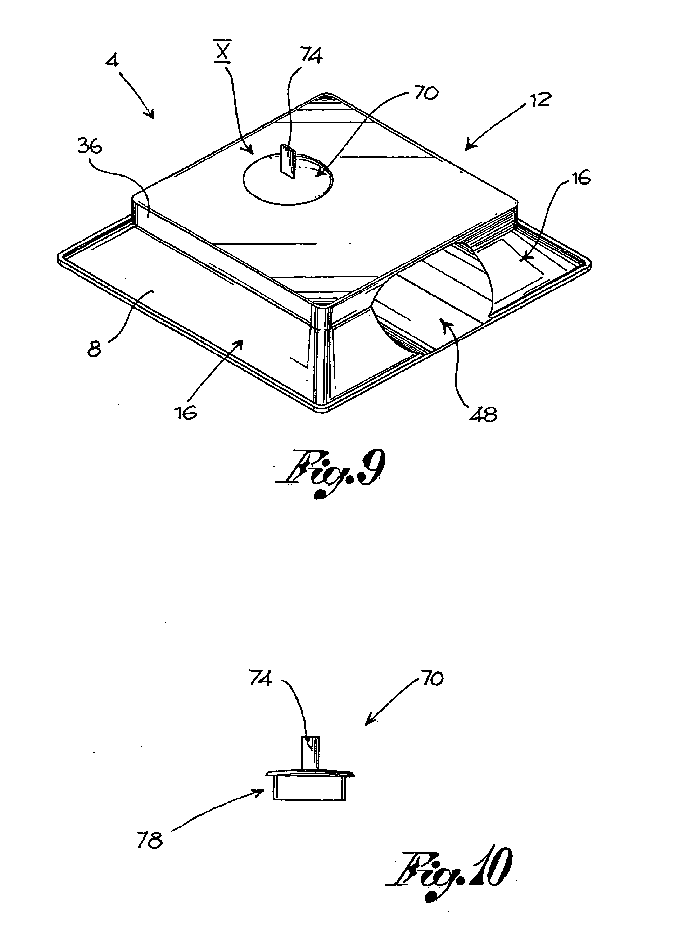

figure 9 shows a perspective view of an anchoring element according to a further embodiment of the present invention;

figure 10 shows a side view of detail X of figure 9.

With reference to the above figures, reference numeral 4 generically denotes a wall anchoring element, suitable for example for fixing a lighting means, such as a lighting point, to a wall.

The anchoring element 4 comprises a fixing body 8 suitable for being inserted in a recess of a wall and for allowing the fixing for example of a lighting means, such as a wall lighting point.

The fixing body 8, according to an embodiment, comprises a stop wall 10 suitable for abutting against a bottom of said wall recess that is preferably blind.

Preferably, body 8 comprises a fixing portion 12 suitable for allowing the fixing of lighting means opposite the recess, that is, outwards the recess, by threaded connecting means.

Advantageously, the body comprises at least one undercut portion 16 facing opposite said recess so as to oppose the extraction of the element from the recess subsequent to the recess closing with a covering layer.

According to a preferred embodiment, the undercut portion 16 is a truncated pyramid portion having a larger base at the stop wall, suitable for being abutted against a bottom of said recess, and a smaller base at said fixing portion 12, facing outwards the recess.

According to a preferred embodiment, at the stop wall 10 the fixing body 8 comprises a room 20 suitable for being filled at least partly with mortar for fixing the element inside the recess.

According to an embodiment, said stop wall is associated to a cover 24 for closing said room 20.

Cover 24 at a support surface 28 to the recess bottom preferably exhibits means for gripping to the bottom itself, such as for example grooves or projections suitable for favouring the fixing of the fixing element.

Cover 24 may be associated to the stop wall for example by pins 28.

Said second fixing portion 12 preferably comprises a fixing plate 36 suitable for receiving threaded connecting means for fixing the lighting means to the wall.

Plate 36 for example is counter shaped relative to the fixing portion 12 and is preferably made of plastic material so as to allow the introduction of threaded connecting means, for example of the self-threading type.

Advantageously, the body comprises a seating chamber 44 suitable for seating electrical cables for the electrical connection of the relevant lighting point.

According to an embodiment, the seating chamber 44 has an elongated shape and is preferably symmetric relative to a symmetry plane S-S. Preferably, chamber 44 is comprised between the stop wall 10 and the fixing portion 12 and comprises an inlet hole 48 for receiving the electrical wires coming from the mains and an outlet hole 50 for connecting said wires to the lighting point.

According to an embodiment, the inlet hole 48 is arranged at a side wall 56 of the fixing body and in particular at the undercut portion 16.

Preferably, said inlet hole 48 is arranged symmetrically relative to the symmetry plane S-S.

The fixing plate 36 comprises said outlet hole 50, in communication with said seating chamber 44 for electrical cables so as to allow the projection of the cables from the wall for connecting the lighting means to the mains.

The outlet hole 50 is advantageously arranged at the fixing portion 12 and pierces through plate 36, preferably axially facing, that is, perpendicular to the wall wherein the fixing element 4 is seated.

On the whole, the inlet hole 48 and the outlet hole 50 are arranged perpendicular to each other.

Preferably, the outlet hole 50 is arranged symmetrically relative to the symmetry plane S-S.

According to an embodiment, the seating chamber 44 exhibits a funnel portion 60 with a decreasing section from said inlet hole 48 to said outlet hole 50.

For example, the seating chamber 44, relative to a section plane perpendicular to the symmetry plane S-S exhibits a section substantially elliptical so as to seat two different electrical cables inserted in the respective fairleads that abut against a narrowing 62 of said funnel portion 60. At such narrowing 62 chamber 44 takes up a circular section directly connected to the outlet hole through a connector 64.

According to an embodiment of the present invention, the anchoring element 4 comprises a closing cap 70 for said outlet hole 50 suitable for obstructing the outlet hole 50 for preventing the inlet of mortar into the seating chamber 44 following the element covering into the recess.

The closing cap 70 may be provided with a hold 74 for facilitating the application and removal of the same.

Preferably, the cap comprises a collar 78 suitable for being inserted into the outlet hole according to a shape coupling.

The assembly of an anchoring element according to the present invention will now be described.

The recess into the selected wall or panel is carried out so as to bring at the recess also the electrical wires for the connection to the mains.

The fixing element is inserted into the recess so as to bring the electrical wires into the seating chamber and make them protrude outwards the wall through the outlet hole.

Advantageously, the insertion of the anchoring element into the recess is such that the anchoring element is completely inside or flush with the wall surrounding the recess.

In other words, the recess depth is at least equal to the distance between plate 36 and the stop wall 10, so that by inserting element 4 into the recess, the element is fully inserted into the recess. Preferably, during the introduction of the element into the recess, the electrical wires are brought into the seating chamber through the inlet hole 48, optionally bringing the fairleads in abutment against narrowing 60.

The outlet hole is then covered by the closing cap 70.

The recess is coated with mortar or concrete so as to fully bury the anchoring element 4. After the coating, the anchoring element is 4 fully covered by the concrete and by the relevant plaster layer, whereas only hold 74 of the closing cap protrudes outwards.

Thanks to the undercut, the anchoring element is locked into the recess without any possibility of removal.

It is therefore possible to remove the closing cap, extract the electrical cables with relevant electrical connection to the lighting means and then install the lighting point.

The fixing of the lighting point can take place by inserting threaded connecting means, preferably self-threading screws into the special fixing holes of the lighting point itself, suitable for being screwed directly into the wall, at the fixing element.

In particular, knowing the geometry of the seating chamber 44, underneath plate 36, it is possible to insert the screws without risking interfering with the electrical wires.

Preferably, the screws pierce through plate 36 by the entire thickness thereof, binding thereon. Thanks to the distance between plate 36 and stop wall 10, the screws can be inserted without interfering with the concrete but binding with the plate only. In this way it is possible to insert the screws without the aid of a drill since it is not necessary to drill the concrete.

As can be appreciated from the description, the anchoring element of the present invention allows overcoming the disadvantages of the prior art.

In particular, the anchoring element according to the invention allows anchoring the lighting point to the wall without piercing into the plaster. In fact, the lighting point may be fixed with self-threading that directly enter into the fixing plate of the anchoring element.

In other words, since the insertion of the fixing element into the wall may be easily carried out during the wall plastering step, the subsequent installation of the point on the wall may be carried out by the user without using any drill, but directly screwing the screws or anchors into the plate of the anchoring element.

Moreover, the free end of the fairlead is contained inside the anchoring element and thus, even if it hit or bent, it cannot damage the surrounding plaster.

It is therefore possible to use lighting points having covering plates of very small size.

Moreover, the undercut configuration of the anchoring element allows fixing thereof to the wall without using any screws or anchors. In fact, after recessing into the wall, for example during the creation of the wall chases for the passage of the electrical cables, it is possible to insert the anchoring element directly into the seat or recess. The following covering of the recess with mortar and subsequent plastering ensures a steady and safe locking of the anchoring element according to the invention.

A man skilled in the art may make several changes and adjustments to the anchoring elements described above in order to meet specific and incidental needs, all falling within the scope of protection defined in the following claims.

## Claims

1. A wall anchoring element (4), suitable for fixing a lighting means to a wall, comprising a fixing body (8) suitable for being inserted into a recess of said wall, said body (8) comprising a seating chamber (44) for electrical cables, **characterised in that**
- said body comprises a fixing portion (12) having threaded connecting means opposite the recess allowing the fixing of a lighting means
- said body comprises at least one undercut portion (16) facing opposite said recess so as to oppose the extraction of the element from the recess subsequent to the recess closing with a covering layer.

2. An anchoring element (4) according to claim 1, wherein the undercut portion (16) is a truncated pyramid portion having a larger base at a stop wall (10) of the body (8), suitable for being abutted against a bottom of said recess, and a smaller base at said fixing portion (12), facing outwards the recess.

3. An anchoring element (4) according to claim 1 or 2, wherein at a stop wall (10), the fixing body (8) comprises a room (20) suitable for being filled at least partly with mortar for fixing the element inside the recess.

4. An anchoring element (4) according to claim 2, wherein said stop wall (10) is associated to a cover (24) for closing said room (20).

5. An anchoring element (4) according to claim 4, wherein said cover (24), at a support surface (28) to the recess bottom exhibits means for gripping to the bottom itself.

6. An anchoring element (4) according to claim 5, wherein said gripping means comprise grooves or projections suitable for favouring the fixing of the fixing element to the recess.

7. An anchoring element (4) according to any one of claims 4 to 6, wherein the cover (24) is associated to the stop wall by pins (28).

8. An anchoring element (4) according to any one of the previous claims, wherein said fixing portion (12) comprises a fixing plate (36) suitable for receiving threaded connecting means for fixing the lighting means to the wall.

9. An anchoring element (4) according to claim 8, wherein the plate (36) is counter shaped relative to the fixing portion (12).

10. An anchoring element (4) according to claim 8 or 9, wherein the plate (36) is made of a plastic material suitable for allowing the insertion of threaded connecting means of the self-threading type.

11. An anchoring element (4) according to any one of the previous claims, wherein the seating chamber (44) has an elongated shape and is preferably symmetric relative to a symmetry plane (S).

12. An anchoring element (4) according to any one of the previous claims, wherein the chamber (44) is comprised between the stop wall (10) and the fixing portion (12) and comprises an inlet hole (48) for receiving the electrical wires coming from the mains and an outlet hole (50) for connecting said wires to the lighting point.

13. An anchoring element (4) according to claim 12, wherein the inlet hole (48) is arranged at a side wall (56) of the fixing body, at the undercut portion (16).

14. An anchoring element (4) according to claim 12 or 13, wherein said inlet hole 48 is arranged symmetrically relative to a symmetry plane (S) of the fixing body (8).

15. An anchoring element (4) according to any one of claims 12 to 14, wherein the outlet hole (50) is arranged at the fixing portion (12) is pierces through the plate 36.

16. An anchoring element (4) according to any one of claims 12 to 15, wherein the outlet hole (50) is arranged symmetrically relative to a symmetry plane (S) of the fixing body (8).

17. An anchoring element (4) according to any one of claims 12 to 16, wherein the inlet hole (48) and the outlet hole (50) are arranged perpendicular to each other.

18. An anchoring element (4) according to any one of claims 12 to 17, wherein the seating chamber (44) exhibits a funnel portion (60) with a decreasing section from said inlet hole (48) to said outlet hole (50).

19. An anchoring element (4) according to any one of the previous claims, wherein the seating chamber (44), relative to a section plane perpendicular to the symmetry plane (S), exhibits a section substantially elliptical so as to seat two different electrical cables inserted in respective fairleads.

20. An anchoring element (4) according to claim 19, wherein the seating chamber (44), at a funnel portion (60), exhibits a narrowing (62) so as to take up a circular section connected to the outlet hole (50) through a connector (64).

21. An anchoring element (4) according to any one of the previous claims, wherein the anchoring element (4) comprises a closing cap (70) for said outlet hole (50) suitable for obstructing said outlet hole (50) for preventing the inlet of mortar into the seating chamber (44) following the element covering into the recess.

22. An anchoring element (4) according to claim 21, wherein the closing cap (70) is provided with a hold (74) for facilitating the application and removal of the same.

23. An anchoring element (4) according to claim 21 or 22, wherein the closing cap (70) comprises a collar (78) suitable for being inserted into the outlet hole (50) according to a shape coupling.

## Patentansprüche

1. Wandverankerungselement bzw. Element zur Wandbefestigung (4), das geeignet ist, ein Beleuchtungsmittel an einer Wand zu befestigen, das einen Befestigungskörper (8) umfasst, der geeignet ist, in eine Vertiefung der Wand eingesetzt zu werden, wobei der Körper (8) eine Aufnahmekammer (44) für elektrische Kabel umfasst, **dadurch gekennzeichnet, dass**
- der Körper einen Befestigungsabschnitt (12) mit Gewindeverbindungsmitteln gegenüber der Vertiefung hat, die das Befestigen eines Beleuchtungsmittels erlauben;
- der Körper zumindest einen unterhöhlten Abschnitt (16) umfasst, der entgegengesetzt zu der Vertiefung gewandt ist, so dass er sich dem Herausziehen des Elements aus der Vertiefung widersetzt, nachdem die Vertiefung mit einer Abdeckschicht geschlossen wurde.

2. Element zur Wandbefestigung (4) nach Anspruch 1, wobei der unterhöhlte Abschnitt (16) ein Pyramidenstumpfabschnitt ist mit einer größeren Grundfläche an einer Anschlagwand (10) des Körpers (8), die geeignet ist, gegen einen Boden der Vertiefung anzustoßen, und einer kleineren Grundfläche an dem Befestigungsabschnitt (12), die von der Vertiefung nach außen gewandt ist.

3. Element zur Wandbefestigung (4) nach Anspruch 1 oder 2, wobei der Befestigungskörper (8) an einer Anschlagwand (10) einen Raum (20) umfasst, der geeignet ist, zumindest teilweise mit Mörtel gefüllt zu werden, um das Element im Inneren der Vertiefung zu befestigen.

4. Element zur Wandbefestigung (4) nach Anspruch 2, wobei die Anschlagwand (10) mit einer Abdeckung (24) zum Schließen des Raums (20) verbunden ist.

5. Element zur Wandbefestigung (4) nach Anspruch 4, wobei die Abdeckung (24) an einer Lagerfläche (28) des Vertiefungsbodens Mittel zum Greifen bzw. Haften an dem Boden selbst besitzt.

6. Element zur Wandbefestigung (4) nach Anspruch 5, wobei das Haftmittel Rillen oder Vorsprünge umfasst, die geeignet sind, das Befestigen des Befestigungselements an der Vertiefung zu begünstigen.

7. Element zur Wandbefestigung (4) nach einem der Ansprüche 4 bis 6, wobei die Abdeckung (24) durch Stifte bzw. Bolzen (28) mit der Anschlagwand verbunden ist.

8. Element zur Wandbefestigung (4) nach einem der vorangehenden Ansprüche, wobei der Befestigungsabschnitt (12) eine Befestigungsplatte (36) umfasst, die geeignet ist, Gewindeverbindungsmittel zum Befestigen des Beleuchtungsmittels an der Wand aufzunehmen.

9. Element zur Wandbefestigung (4) nach Anspruch 8, wobei die Platte (36) relativ zu dem Befestigungsabschnitt (12) als eine Rastkante geformt ist.

10. Element zur Wandbefestigung (4) nach Anspruch 8 oder 9, wobei die Platte (36) aus einem Kunststoffmaterial gefertigt ist, das geeignet ist, das Einführen eines selbsteinfädelnden Gewindeverbindungsmittels zu erlauben.

11. Element zur Wandbefestigung (4) nach einem der vorangehenden Ansprüche, wobei die Aufnahmekammer (44) eine längliche Form hat und vorzugsweise relativ zu einer Symmetrieebene (S) symmetrisch ist.

12. Element zur Wandbefestigung (4) nach einem der vorangehenden Ansprüche, wobei die Aufnahmekammer (44) zwischen der Anschlagwand (10) und dem Befestigungsabschnitt (12) beinhaltet ist und ein Einlassloch (48) zum Aufnehmen der von Leitungsnetz kommenden elektrischen Drähte und ein Auslassloch (50) zum Verbinden der Drähte mit dem Beleuchtungspunkt umfasst.

13. Element zur Wandbefestigung (4) nach Anspruch 12, wobei das Einlassloch (48) an einer Seitenwand (56) des Befestigungskörpers an dem unterhöhlten Abschnitt (16) angeordnet ist.

14. Element zur Wandbefestigung (4) nach Anspruch 12 oder 13, wobei das Einlassloch (48) relativ zu einer Symmetrieebene (S) des Befestigungskörpers (8) symmetrisch angeordnet ist.

15. Element zur Wandbefestigung (4) nach einem der Ansprüche 12 bis 14, wobei das an dem Befestigungsabschnitt (12) angeordnete Auslassloch (59) die Platte (36) durchbohrt.

16. Element zur Wandbefestigung (4) nach einem der Ansprüche 12 bis 15, wobei das Auslassloch (50) relativ zu einer Symmetrieebene (S) des Befestigungskörpers (8) symmetrisch angeordnet ist.

17. Element zur Wandbefestigung (4) nach einem der Ansprüche 12 bis 16, wobei das Einlassloch (48) und das Auslassloch (50) senkrecht zueinander angeordnet sind.

18. Element zur Wandbefestigung (4) nach einem der Ansprüche 12 bis 17, wobei die Aufnahmekammer (44) einen Trichterabschnitt (60) mit einem von dem Einlassloch (48) zu dem Auslassloch (50) abnehmenden Schnitt aufweist.

19. Element zur Wandbefestigung (4) nach einem der vorangehenden Ansprüche, wobei die Aufnahmekammer (44) relativ zu einer Schnittebene senkrecht zu der Symmetrieebene (S) einen Schnitt aufweist, der im Wesentlichen elliptisch ist, um zwei verschiedene elektrische Kabel zu lagern, die in jeweiligen Führungen eingeführt werden.

20. Element zur Wandbefestigung (4) nach Anspruch 19, wobei die Aufnahmekammer (44) an einem Trichterabschnitt (60) eine Verengung (62) aufweist, so dass sie einen kreisförmigen Schnitt einnimmt, der durch ein Verbindungsglied bzw. Anschlussstück (64) mit dem Auslassloch (50) verbunden ist.

21. Element zur Wandbefestigung (4) nach einem der vorangehenden Ansprüche, wobei das Element zur Wandbefestigung (4) eine Verschlusskappe (70) für das Auslassloch (50) umfasst, die geeignet ist, das Auslassloch (50) zu versperren, um anschließend an das Abdecken des Elements in der Vertiefung den Eintritt von Mörtel in die Aufnahmekammer (44) zu verhindern.

22. Element zur Wandbefestigung (4) nach Anspruch 21, wobei die Verschlusskappe (70) mit einem Griff (74) versehen ist, um die Anwendung und Entfernung desselben zu erleichtern.

23. Element zur Wandbefestigung (4) nach Anspruch 21 oder 22, wobei die Verschlusskappe (70) eine Manschette (78) umfasst, die geeignet ist, entsprechend einer Formkupplung in das Auslassloch (50) eingesetzt zu werden.

## Revendications

1. Élément d'ancrage mural (4), adapté pour fixer un moyen d'éclairage sur un mur, comprenant un corps de fixation (8) adapté pour être inséré dans une saignée dudit mur, ledit corps (8) comprenant un logement (44) pour des câbles électriques, **caractérisé en ce que**
ledit corps comprend une partie de fixation (12) comportant un moyen de connexion fileté en inversement à la saignée permettant la fixation d'un moyen d'éclairage,
ledit corps comprend au moins une partie dégagée (16) tournée en inversement à ladite saignée de manière à s'opposer à l'extraction de l'élément depuis la saignée suite à la fermeture de la saignée par une couche de couverture.

2. Élément d'ancrage (4) selon la revendication 1, dans lequel la partie dégagée (16) est une partie de pyramide tronquée comportant une base plus large au niveau d'une paroi de butée (10) du corps (8), adaptée pour venir en butée contre le fond de ladite saignée, et une base plus petite au niveau de ladite partie de fixation (12), tournée vers l'extérieur de la saignée.

3. Élément d'ancrage (4) selon la revendication 1 ou 2, dans lequel au niveau d'une paroi de butée (10), le corps de fixation (8)) comprend un espace libre (20) adapté pour être rempli au moins partiellement de mortier pour fixer l'élément à l'intérieur de la saignée.

4. Élément d'ancrage (4) selon la revendication 2, dans lequel ladite paroi de butée (10) est associée à un capot (24) destiné à fermer ledit espace libre (20).

5. Élément d'ancrage (4) selon la revendication 4, dans lequel ledit capot (24), au niveau d'une surface d'appui (28) sur le fond de la saignée présente un moyen d'accroche directement au fond.

6. Élément d'ancrage (4) selon la revendication 5, dans lequel ledit moyen d'accroche comprend des rainures ou saillies adaptées pour favoriser la fixation de l'élément de fixation à la saignée.

7. Élément d'ancrage (4) selon l'une quelconque des revendications 4 à 6, dans lequel le capot (24) est associé à la paroi de butée par des ergots (28).

8. Élément d'ancrage (4) selon l'une quelconque des revendications précédentes, dans lequel ladite partie de fixation (12) comprend une plaque de fixation (36) adaptée pour recevoir un moyen de connexion fileté destiné à fixer le moyen d'éclairage au mur.

9. Élément d'ancrage (4) selon la revendication 8, dans lequel la plaque (36) est profilée de façon contraire à la partie de fixation (12).

10. Élément d'ancrage (4) selon la revendication 8 ou 9, dans lequel la plaque (36) est faite d'un matériau plastique adapté pour permettre l'insertion du moyen de connexion fileté du type auto-foreur.

11. Élément d'ancrage (4) selon l'une quelconque des revendications précédentes, dans lequel le logement (44) possède une forme allongée et est de préférence symétrique par rapport à un axe de symétrie (S).

12. Élément d'ancrage (4) selon l'une quelconque des revendications précédentes, dans lequel le logement (44) est compris entre la paroi de butée (10) et la partie de fixation (12) et comprend un orifice d'entrée (48) destiné à recevoir les fils électriques arrivant du secteur et un orifice de sortie (50) destiné à connecter lesdits fils au point d'éclairage.

13. Élément d'ancrage (4) selon la revendication 12, dans lequel l'orifice d'entrée (48) est disposé au niveau d'une paroi latérale (56) du corps de fixation, au niveau de la partie dégagée (16).

14. Élément d'ancrage (4) selon la revendication 12 ou 13, dans lequel ledit orifice d'entrée (48) est disposé symétriquement par rapport à un axe de symétrie (S) du corps de fixation (8).

15. Élément d'ancrage (4) selon l'une quelconque des revendications 12 à 14, dans lequel l'orifice de sortie (50) disposé au niveau de la partie de fixation (12) est percé à travers la plaque (36).

16. Élément d'ancrage (4) selon l'une quelconque des revendications 12 à 15, dans lequel l'orifice de sortie (50) est disposé symétriquement par rapport à un axe de symétrie (S) du corps de fixation (8).

17. Élément d'ancrage (4) selon l'une quelconque des revendications 12 à 16, dans lequel l'orifice d'entrée (48) et l'orifice de sortie (50) sont disposés en perpendiculaire l'un par rapport à l'autre.

18. Élément d'ancrage (4) selon l'une quelconque des revendications 12 à 17, dans lequel le logement (44) présente une partie en entonnoir (60) avec une section qui diminue depuis ledit orifice d'entrée (48) vers ledit orifice de sortie (50).

19. Élément d'ancrage (4) selon l'une quelconque des revendications précédentes, dans lequel le logement (44), par rapport à un plan de section perpendiculaire à l'axe de symétrie (S), présente une section sensiblement elliptique de sorte de recevoir deux câbles électriques différents insérés dans des guides respectifs.

20. Élément d'ancrage (4) selon la revendication 19, dans lequel le logement (44), au niveau d'une partie en entonnoir (60), présente un rétrécissement (62) de sorte d'entrer en jonction avec une section circulaire connectée à l'orifice de sortie (50) par le biais d'un connecteur (64).

21. Élément d'ancrage (4) selon l'une quelconque des revendications précédentes, dans lequel l'élément d'ancrage (4) comprend un bouchon de fermeture (70) pour ledit orifice de sortie (50) adapté pour obstruer ledit orifice de sortie (50) pour empêcher l'entrée de mortier dans le logement (44) après la couverture de l'élément dans la saignée.

22. Élément d'ancrage (4) selon la revendication 21, dans lequel le bouchon de fermeture (70) est muni d'une poignée (74) destinée à faciliter l'insertion et le retrait de celui-ci.

23. Élément d'ancrage (4) selon la revendication 21 ou 22, dans lequel le bouchon de fermeture (70) comprend un collier (78) adapté pour être inséré dans l'orifice de sortie (50) conformément à un accouplement de forme.
